# EUROPÄISCHE PATENTANMELDUNG

(11) **EP 1 469 181 A2**
(43) Veröffentlichungstag der Anmeldung: **20.10.2004**
(21) Anmeldenummer: 04101216.2
(22) Anmeldetag: 24.03.2004
(51) Int. Cl.: F02D 41/12, F02D 41/22, F02D 11/10, F02D 41/14

(54) **Verfahren und Vorrichtung zum sicheren Betreiben eines Verbrennungsmotors im Schiebebetrieb**

(30) Priorität: 17.04.2003 DE 10317648
(71) Anmelder: ROBERT BOSCH GMBH, 70442 Stuttgart (DE)
(72) Erfinder: Pitzal, Volker, 73550 Waldstetten/Wissgoldingen (DE); Schmitt, Peter, 71701 Schwieberdingen (DE)

(57) **Zusammenfassung**

Vorgestellt wird ein Verfahren zum Betreiben eines Verbrennungsmotors im Schiebebetrieb mit den Schritten: Detektieren eines Übergangs in den Schiebebetrieb
nach dem Detektieren des Übergangs, Freigeben einer Überwachung eines Ansteuersignals für ein Leistungsstellglied (18; 28; 30) des Verbrennungsmotors (10) dann, wenn vorbestimmte Freigabebedingungen erfüllt sind,
nach der Freigabe, Vergleichen eines Ansteuersignals für das Leistungsstellglied (18; 28; 30) des Verbrennungsmotors (10) mit einem Schwellenwert, und
Auslösen einer Fehlerreaktion dann, wenn das Ansteuersignal den Schwellenwert überschreitet. Das Verfahren zeichnet sich dadurch aus,
dass der Schwellenwert in einer Übergangsphase von einem anfänglichen Wert an bis zu einem Endwert reduziert wird. Die Erfindung betrifft ferner eine Vorrichtung zur Durchführung des Verfahrens.

## Beschreibung

### Stand der Technik

Die Erfindung betrifft ein Verfahren zum Betreiben eines Verbrennungsmotors im Schiebebetrieb mit den Schritten: Detektieren eines Übergangs in den Schiebebetrieb;
nach dem Detektieren des Übergangs, Freigeben einer Überwachung eines Ansteuersignals für ein Leistungsstellglied des Verbrennungsmotors dann, wenn vorbestimmte Freigabebedingungen erfüllt sind,
nach der Freigabe, Vergleichen eines Ansteuersignals für ein Leistungsstellglied des Verbrennungsmotors mit einem Schwellenwert, und
Auslösen einer Fehlerreaktion dann, wenn das Ansteuersignal den Schwellenwert überschreitet.

Ferner betrifft die Erfindung eine Vorrichtung zum Betreiben eines Verbrennungsmotors mit wenigstens einem Detektor, der Übergänge in den Schiebebetrieb detektiert, einem Steuergerät, das eine Überwachung eines Ansteuersignals für ein Leistungsstellglied des Verbrennungsmotors beim Vorliegen wenigstens einer vorbestimmten Freigabebedingung freigibt und das, nach der Freigabe, ein Ansteuersignal für ein Leistungsstellglied des Verbrennungsmotors mit einem Schwellenwert vergleicht und eine Fehlerreaktion dann auslöst, wenn das Ansteuersignal den Schwellenwert überschreitet.

Ein solches Verfahren und eine solche Vorrichtung sind aus der DE 33 01 742 der Anmelderin bekannt.

Unter einem Schiebebetrieb eines Verbrennungsmotors wird im Folgenden ein Betrieb verstanden, bei dem der Verbrennungsmotor kein Drehmoment abgibt, sondern vielmehr selbst durch externe Einflüsse angetrieben wird. Ein Schiebebetrieb tritt beispielsweise beim Abbremsen oder bei einer Bergabfahrt eines Kraftfahrzeugs auf, wenn der Fahrer kein Drehmoment anfordert. Der Übergang in den Schiebebetrieb kann beispielsweise durch einen Fahrerwunschgeber, beispielsweise einen Fahrpedalgeber erfasst werden.

Als Leistungsstellglied kommen sowohl luftzumessende Stellglieder, beispielsweise eine Drosselklappe oder eine variable Ventilsteuerung, als auch kraftstoffzumessende Stellglieder, typischerweise ein Einspritzsystem, in Frage. Als Fehlerreaktion kann beispielsweise die Endstufe des Leistungsstellgliedes deaktiviert werden.

Die oben angegebene DE 33 01 742 betrifft ein Electronic Diesel Control-System für einen Dieselmotor (EDC). Die vorliegende Erfindung betrifft ebenfalls EDC-Systeme, ist aber nicht darauf beschränkt. Sie kann vielmehr auch bei Ottomotoren mit E-Gas (elektronisch gesteuerter Drosselklappe) oder bei einer variablen Ventilsteuerung, die als Leistungsstellglied dient, verwendet werden. Die im folgenden mehrfach erwähnte Ansteuerdauer bezieht sich zunächst auf eine Impulsbreite, mit der ein Einspritzventil öffnend angesteuert wird. An Stelle der Ansteuerdauer kann aber der Betrag jedes Ansteuersignals eines Leistungsstellgliedes entsprechend verwendet werden.

Bei Dieselmotoren wird das erzeugte Drehmoment wesentlich durch die Kraftstoffeinspritzmenge bestimmt. Dies gilt analog für Ottomotoren mit Direkteinspritzung im Schichtbetrieb. Fehler in der Kraftstoffzumessung können in diesen Fällen zu einer unerwünschten Drehmomenterzeugung führen. Insbesondere im Schiebebetrieb kann ein unerwünscht erzeugtes motorisches Drehmoment sicherheitskritisch sein, weil es zu einer ungenügenden Motorbremswirkung oder sogar zu einem unerwünschten Beschleunigen führen kann.

Es ist in diesem Zusammenhang per se bekannt, die Ansteuerdauer der Einspritzventile zu überwachen. Dabei wird beim Übergang in den Schiebebetrieb durch Loslassen des Fahrpedals überwacht, ob oberhalb der maximalen Eingriffsdrehzahl eines Leerlaufreglers noch Einspritzungen durch unzulässig hohe Ansteuerdauern auftreten.

Im Fehlerfall, also bei unerwünschten Einspritzungen, wird nach einer Wartezeit von maximal einer Sekunde eine Fehlerreaktion eingeleitet. Diese Wartezeit ist notwendig, da auch bei fehlendem Fahrerwunsch reguläre Ansteuerdauern auftreten können, beispielsweise durch Anforderungen einer Ruckeldämpfung. Bekanntlich versteht man unter einem Ruckeln Triebstrangschwingungen, die u.a. durch sprunghafte Änderungen der Ansteuerdauer angeregt werden. Zur Dämpfung dieser Schwingungen kann eine Funktion zur Ruckeldämpfung beispielsweise Drehzahlunterschwingern durch Anfordern einer Ansteuerdauer entgegenwirken. Eine solche Ruckeldämpfungsfunktion mit einem Störungsregler, der an der Ansteuersignalbildung beteiligt ist, wird beispielsweise durch die DE 195 37 787 A1 der Anmelderin offenbart.

Nach Ablauf der Wartezeit wird die Ansteuersignaldauer mit einem festen Schwellenwert verglichen. Der Wert des Schwellenwerts bestimmt die Empfindlichkeit der Fehlererkennung. Ist er klein, ist die Empfindlichkeit, mit der echte Fehler entdeckt werden, groß. Allerdings führt eine hohe Empfindlichkeit auch zu der Gefahr, dass reguläre Drehmomentanforderungen der Ruckeldämpfungsfunktion und/oder des Leerlaufreglers als Fehler gewertet werden.

Bei modernen Kraftfahrzeugen werden die Triebstränge von Fahrzeuggeneration zu Fahrzeuggeneration eher elastischer, während die einwirkenden Drehmomente auf Grund steigender Verbrennungsmotorleistungen immer größer werden. Ohne Ruckeldämpfung würde dies zu einer verlängerten Abklingzeit einer Triebstrangschwingung führen. Bei Verwendung einer Ruckeldämpfung tritt die Folge auf, dass die von der Ruckeldämpfung angeforderten Ansteuerdauern ebenfalls über eine längere Zeitspanne wirksam sind und auch größer sind.

Dadurch kann es passieren, dass eine Fehlerreaktion als Folge einer vermeintlich zu großen Ansteuerdauer bereits als Folge einer Ansteuerdauer ausgelöst wird, die regulär durch die Ruckeldämpfung angefordert wurde.

Um dies zu vermeiden, kann die Empfindlichkeit der Fehlererkennung durch einen vergrößerten Schwellenwert verringert werden, so dass die Fehlererkennung unempfindlicher reagiert. Dadurch wird aber auch die Sicherheit, mit der echte Fehler erkannt werden, beeinträchtigt. Ferner können Eingriffe der Ruckeldämpfung beschränkt werden, oder der Triebstrang kann versteift werden. Dadurch wird die Sicherheit nicht beeinträchtigt. Beide Maßnahmen beinträchtigen jedoch den Fahrkomfort. Die zweite Maßnahme führt überdies zu einem höheren Herstellungsaufwand und, sofern die Versteifung mit einer Gewichtszunahme verbunden ist, zu einem höheren Kraftstoffverbrauch.

Vor diesem Hintergrund besteht die Aufgabe der Erfindung in der Angabe eines Verfahrens, das eine Aufrechterhaltung der Sicherheitsfunktion bei modernen Kraftfahrzeugen unter Vermeidung der genannten Nachteile erlaubt. Insbesondere soll auch bei elastischer werdenden Triebsträngen in Verbindung mit höheren Drehmomenten eine gute Überwachungsqualität gewährleistet bleiben, ohne dass Komfortfunktionen wie die Ruckeldämpfung eingeschränkt werden müssen.

Diese Aufgabe wird sowohl bei einem Verfahren als auch bei einer Vorrichtung der eingangs genannten Art dadurch gelöst, dass der Schwellenwert in einer Übergangsphase von einem anfänglichen Wert an bis zu einem Endwert reduziert wird.

### Vorteile der Erfindung

Durch diese Merkmale wird die Aufgabe vollkommen gelöst. Die Reduzierung des Schwellenwertes erlaubt es, zunächst mit einer vergleichsweise unempfindlichen Fehlererkennung zu beginnen und deren Empfindlichkeit mit zunehmendem zeitlichen Abstand vom Beginn des Übergangs in den Schiebebetrieb an zu erhöhen. Dadurch wird in der Summe eine gleichbleibend hohe Überwachungsqualität ohne signifikant hohe Fehl-Erkennungen und ohne Einschränkungen von Komfortfunktionen erreicht.

Es ist bevorzugt, dass das Ansteuersignal eine Ansteuerdauer für wenigstens ein Einspritzventil ist.

Diese Ausgestaltung ermöglicht eine wenig aufwendige Überwachung einer Einspritzventilanordnung als Leistungsstellglied.

Ferner ist bevorzugt, dass der Wert des Ansteuersignals bei der Freigabe erfasst wird und der Schwellenwert durch Vergrößerung des erfassten Ansteuersignals gebildet wird.

Durch dieses Merkmal wird bei der Schwellenwertbildung automatisch die Geschwindigkeit der Anpassung des Ansteuersignals an die verminderte Drehmomentanforderung berücksichtigt. Sinkt die Ansteuersignaldauer schnell ab, ergibt sich eine kleine Ansteuersignaldauer bei der Freigabe und damit ein kleiner, angepasster Schwellenwert. Bei einem langsamen Absinken ergibt sich entsprechend ein größerer, angepasster Schwellenwert.

Bevorzugt ist auch, dass die Vergrößerung durch additive Verknüpfung des erfassten Ansteuersignals mit einem vorbestimmten Abstand oder durch multiplikative Verknüpfung mit einem vorbestimmten Faktor oder durch Bestimmung des Schwellenwertes durch Offline-Bewertung der möglichen Betriebszustände erzielt wird.

Diese Ausgestaltungen lassen sich besonders einfach implementieren und ergeben reproduzierbare Schwellenwerte.

Ferner ist bevorzugt, dass der Schwellenwert stetig reduziert wird.

Eine stetige Reduktion ermöglicht eine stetige Nachführung des Schwellenwertes an die beim Übergang in den Schiebebetrieb kleiner werdende Ansteuerdauer.

Bevorzugt ist ferner, dass der Schwellenwert abschnittsweise linear reduziert wird.

Durch dieses Merkmal wird ein Kleinerwerden der Ansteuerdauer, das einem gekrümmten, möglicherweise nur aufwendig nachzubildenden zeitlichen Verlauf folgt, durch rechentechnisch leicht beherrschbare Geradenabschnitte angenähert.

Weiter bevorzugt ist, dass die vorbestimmten Freigabebedingungen wenigstens das Abwarten einer Wartezeit von 500 ms bis 900 ms umfassen.

Diese Zeitspanne entspricht einer typischen Zeitdauer, in der eine Ruckeldämpfungsfunktion noch größere Drehmomente und damit Ansteuerdauern anfordert, die von einem Fehler nicht durch einen einfachen Schwellenwertvergleich unterschieden werden können.

Bevorzugt ist auch, dass das Reduzieren des Schwellenwertes nach 1400 bis 3000 ms abgeschlossen ist.

Durch diese Ausgestaltung wird erreicht, dass die Empfindlichkeit der Fehlererkennung, die mit sinkendem Schwellenwert steigt, nach dieser Zeitspanne maximal ist, so dass eine zuverlässige Detektion unerwünschter Ansteuerungen des Leistungsstellgliedes gewährleistet ist.

Ferner ist bevorzugt, dass das Steuergerät wenigstens eine der genannten bevorzugten Ausgestaltungen steuert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Fig. 1: schematisch einen Verbrennungsmotor mit Stellgliedern, Sensorik und einem Steuergerät;
- Fig. 2: ein Flussdiagramm als Ausführungsbeispiel eines erfindungsgemäßen Verfahrens;
- Fig. 3: den zeitlichen Verlauf verschiedener Größen nach dem Stand der Technik, und
- Fig. 4: den zeitlichen Verlauf vergleichbarer Größen nach einem Ausführungsbeispiel der Erfindung.

### Beschreibung der Ausführungsbeispiele

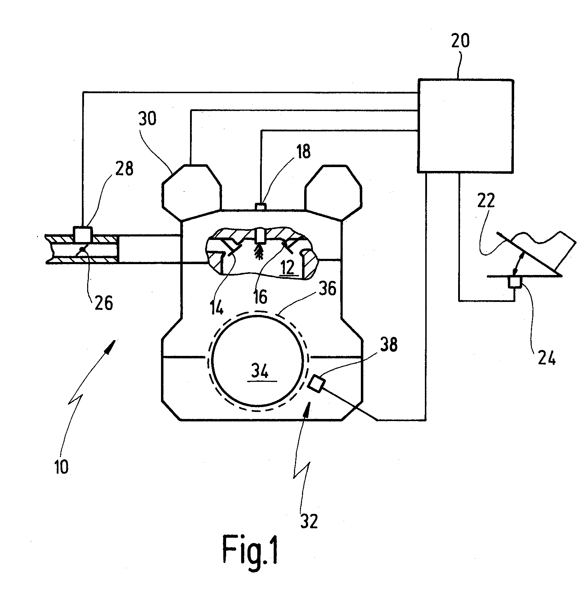

Die Ziffer 10 in der Figur 1 bezeichnet die Gesamtansicht eines stark schematisiert dargestellten Verbrennungsmotors mit wenigstens einem Brennraum 12. Eine Füllung des Brennraums 12 wird über ein Einlassventil 14 und ein Auslassventil 16 ausgewechselt. Zu einer Luftfüllung des Brennraums 12 wird über ein Einspritzventil 18 Kraftstoff zugemessen, wobei der Zeitpunkt der Zumessung und die zugemessene Menge von einem Steuergerät 20 gesteuert werden. Dabei wird das Einspritzventil 18 als Leistungsstellglied benutzt. Die zugemessene Menge bestimmt ganz wesentlich das vom Verbrennungsmotor 10 erzeugte Drehmoment. Die Ansteuerung des Leistungsstellgliedes erfolgt unter anderem in Abhängigkeit von einem Fahrerwunsch, der über ein Fahrpedal 22 von einem Fahrpedalgeber 24 erfasst und an das Steuergerät 20 weitergeleitet wird.

Eine solche Art der Leistungssteuerung ist für einen Dieselmotor typisch. Eine vergleichbare Leistungssteuerung über die Menge des zugemessenen Kraftstoffs erfolgt auch bei einem Ottomotor mit Direkteinspritzung im Betrieb mit geschichteter Brennraumfüllung. Im Unterschied zum Dieselmotor, bei dem die Einspritzung die Verbrennung auslöst, erfolgt beim Ottomotor eine Fremdzündung der Brennraumfüllung, beispielsweise durch eine Zündkerze. Bei einem Ottomotor mit Direkteinspritzung, der im Homogenbetrieb, also mit homogener Gemischverteilung im Brennraum 12, betrieben wird, erfolgt die Einstellung des gewünschten Drehmomentes in Abhängigkeit vom Fahrerwunsch über die Menge der Füllung des Brennraums 12.

Dies gilt analog auch für einen Verbrennungsmotor mit Saugrohreinspritzung. In diesen Fällen kann die Menge der Brennraumfüllung über eine Drosselklappe 26, die von einem Drosselklappensteller 28 in gesteuerter Weise vom Steuergerät 20 betätigt wird, eingestellt werden. In diesem Fall dient die Drosselklappe 26 mit dem Drosselklappensteller 28 als Leistungsstellglied. Alternativ kann die Menge der Füllung des Brennraums 12 auch über eine variable Ansteuerung des Einlassventils 14 durch einen Einlassventilsteller 30, der ebenfalls vom Steuergerät 20 angesteuert wird, erfolgen. Der Verbrennungsmotor 10 weist ferner eine Drehzahlsensorik 32 auf, die beispielsweise aus einem Geberrad 34 mit ferromagnetischen Markierungen 36 und einem Induktivsensor 38 bestehen kann.

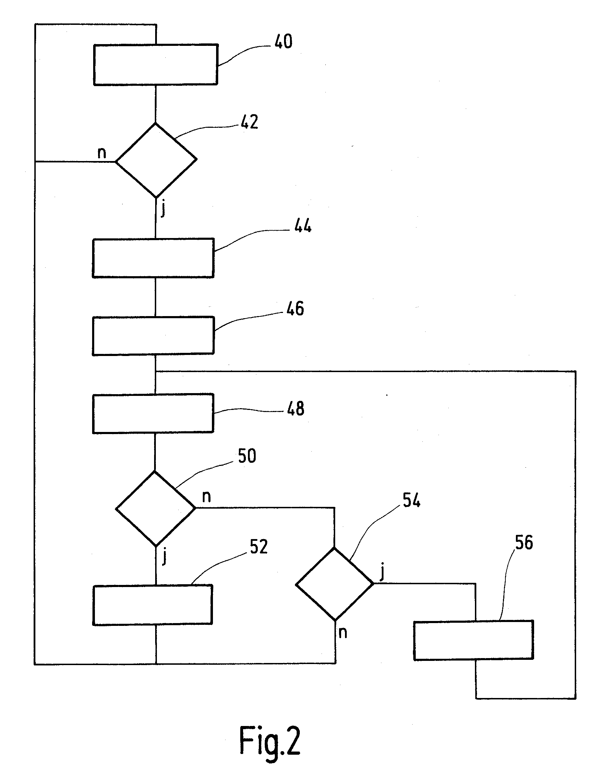

Figur 2 zeigt ein Ausführungsbeispiel eines erfindungsgemäßen Verfahrens in der Form eines Flussdiagramms. Dabei repräsentiert der Schritt 40 ein Hauptprogramm zur Steuerung des Verbrennungsmotors 12, das, wie auch die folgenden Programmschritte, im Steuergerät 20 abläuft. Aus dem Hauptprogramm 40 heraus wird in einem Schritt 42 abgefragt, ob der Verbrennungsmotor 10 im Schiebebetrieb betrieben werden soll und ob die Bedingungen für eine Freigabe der Überwachung der Ansteuerdauer eines Einspritzventils 18 vorliegen. Bei einer Verneinung dieser Abfrage im Schritt 42 wird die Schleife aus den Schritten 40 und 42 gegebenenfalls periodisch solange durchlaufen, bis die Freigabebedingungen erfüllt sind. Die Freigabebedingung kann beispielsweise darin bestehen, dass eine Wartezeit zwischen einem Auslösen des Schiebebetriebs und der Freigabe der Überwachung verstrichen sein muss.

Sobald die Überwachung durch Bejahen der Abfrage im Schritt 42 freigegeben wird, erfolgt im Schritt 44 eine Erfassung der zu diesem Zeitpunkt aktuellen Ansteuerdauer AS_akt. Anschließend wird, im Rahmen einer ersten Möglichkeit, ein Schwellenwert SW durch rechnerisches Vergrößern der Ansteuerdauer AS_akt gebildet. Dies kann dadurch erfolgen, dass die Ansteuerdauer AS_akt mit einem Faktor >1 multipliziert wird oder dadurch, dass ein Offset d zu dem aktuellen Wert für die Ansteuerdauer AS_akt addiert wird. Der so gebildete Schwellenwert dient als Eingangswert für eine Schleife aus den Schritten 48, 50, 54 und 56, in der fortlaufend ein aktualisierter Wert für die Ansteuerdauer mit einem fortlaufend angepassten Schwellenwert verglichen wird. Mit anderen Worten: Im Rahmen der ersten Möglichkeit wird der Schwellenwert gewissermaßen online im Betrieb gebildet.

Alternativ erfolgt im Rahmen einer zweiten Möglichkeit eine Offline-Bestimmung des möglichen Betriebszustands in Verbindung mit der Bestimmung eines Offsets. Dazu kann beispielsweise ein Schwellenwert-Kennfeld durch Betriebsparameter des Verbrennungsmotors der Drehzahl und der zeit seit dem Aktivieren der Schubüberwachung adressiert werden. Mit anderen Worten: Der Schwellenwertes wird durch Offline-Bewertung der möglichen Betriebszustände festgelegt.

Für den Vergleich mit dem Schwellenwert wird zunächst in dem Schritt 48 erneut ein aktueller Wert AS_akt für die Ansteuerdauer ermittelt. Dieser Wert wird anschließend im Schritt 50 mit dem gerade aktuellen Wert für den Schwellenwert verglichen. Beim ersten Durchlauf der genannten Schleife aus den Schritten 48, 50, 54 und 56 ist dies der Wert, der im Schritt 46 ermittelt worden ist. Der Vergleich im Schritt 50 kann darin bestehen, dass überprüft wird, ob die Ansteuerdauer AS_akt den Schwellenwert SW überschreitet. Wenn dies nicht der Fall ist, wird im Schritt 54 überprüft, ob der Verbrennungsmotor 10 weiter im Schiebebetrieb betrieben werden soll. Wird dies verneint, erfolgt eine Verzweigung in das Hauptprogramm zur Steuerung des Verbrennungsmotors (Schritt 40). Soll der Verbrennungsmotor 10 jedoch weiter im Schiebebetrieb betrieben werden, wird die Abfrage im Schritt 54 bejaht und es erfolgt im Schritt 56 eine Reduzierung des Schwellwertes SW, in dem dieser Schwellenwert SW nach einem vorbestimmten Zusammenhang als Funktion der Zeit als SW(t) neu gebildet wird. Mit diesem neu gebildeten, reduzierten Schwellenwert wird vor den Schritt 48 zurück verzweigt. Anschließend wird im Schritt 48 die aktuelle Ansteuerdauer erfasst und im Schritt 50 mit dem reduzierten Schwellenwert verglichen.

Auf diese Weise erfolgt beim wiederholten Durchlaufen der Schleife aus den Schritten 48, 50, 54 und 56 jeweils ein Vergleich von aktuell ermittelten Ansteuerdauern AS_akt mit einem fortwährend angepassten Schwellenwert SW. Diese Schleife wird verlassen, wenn der Fahrer wieder Drehmoment anfordert und so den Schiebebetrieb beendet. Dies wird, wie beschrieben, im Schritt 54 bemerkt. Alternativ dazu kann die beschriebene Schleife aus dem Schritt 50 heraus verlassen werden, wenn nämlich die Ansteuerdauer AS_akt dort den zulässigen Schwellenwert SW übersteigt. In diesem Fall wird die Abfrage im Schritt 50 bejaht und es erfolgt im Schritt 52 eine Fehlerreaktion, bevor in das Hauptprogramm zur Motorsteuerung (Schritt 40) zurückverzweigt wird. Die Fehlerreaktion kann beispielsweise in einem Deaktivieren der betroffenen Endstufe, die das Einspritzventil 18 versorgt, bestehen.

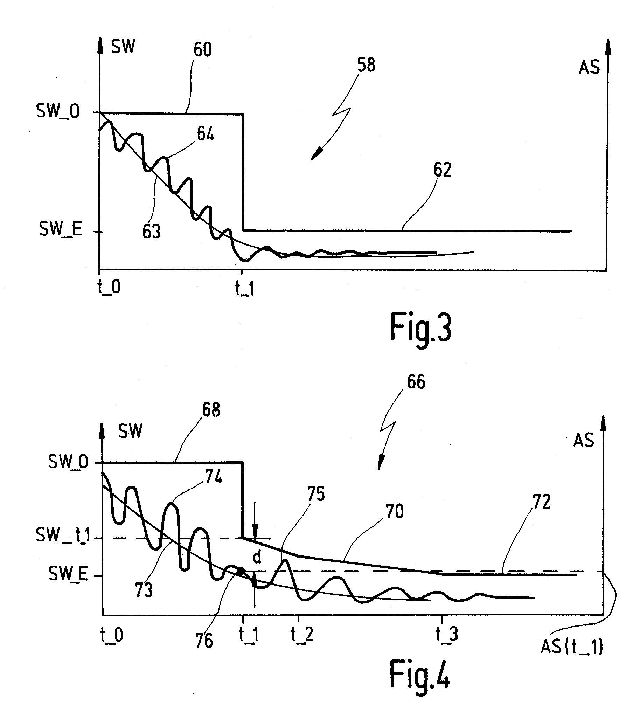

Figur 3 zeigt zeitliche Verläufe eines Ansteuersignals für ein Leistungsstellglied 18; 28; 30 des Verbrennungsmotors 10 sowie eines Schwellenwerte SW zur Überwachung des Ansteuersignals AS in Verbindung mit dem Übergang in den Schiebebetrieb des Verbrennungsmotors 10. Ein solcher Übergang wird zum Zeitpunkt t_0 beispielsweise durch ein entsprechendes Signal des Fahrpedalsensors 24 ausgelöst. Fahrpedalsensor 24 stellt damit ein Beispiel eines Detektors zum Detektieren solcher Übergänge dar. Daraufhin wird die Ansteuerdauer AS, um harte Lastwechselschläge und eine Anregung von Schwingungen des Triebstrangs zu vermeiden, beispielsweise nach einer Zeitfunktion 63 allmählich reduziert. Den Zeitverlauf 63 sind Regelschwingungen einer Ruckeldämpfungsfunktion oder einer Leerlaufregelungsfunktion überlagert. Diese Überlagerung führt zu einem oszillierenden Verlauf des Ansteuersignals AS, wie es in Figur 4 dargestellt ist. Unmittelbar nach einem Auslösen des Schiebebetriebs des Zeiptunkts t_0 wird noch ein maximaler Schwellenwert SW_0 für eine eventuelle Überwachung des Ansteuersignals AS gewählt, weil das Ansteuersignal AS erst allmählich abfällt.

Ab dem Zeitpunkt t_1 darf das leistungsbestimmende Stellglied nicht mehr angesteuert werden, da sonst eine Überschreitung des verringerten Schwellenwertes möglich wäre. Bei realen Systemen ist der Schwellenwert ab dem Zeitpunkt t_1 so klein, dass sicher keine momentenerhöhende Einspritzung erfolgt.

Nach dem Ablauf einer Wartezeit, die vom Auslösen des Schiebebetriebs zum Zeitpunkt t_0 aus gemessen wird, erfolgt zum Zeitpunkt t_1 eine sprunghafte Reduzierung des Schwellenwertes. Wie eingangs beschrieben, treten bei diesem Vorgehen Probleme auf, wenn die Oszillationen im Signal 64 größer werden oder wenn die Steigung des Signals 63, die der mittleren Steigung des Signals 64 gleicht, kleiner wird (langsamerer Abfall von AS). In diesem Fall könnten reguläre Ansteuersignale als Maxima der Kurve 64 noch den reduzierten Schwellenwert 62 überschreiten oder es müsste die Wartezeit zwischen den Zeitpunkten t_0 und t_1 verlängert werden. Die erste Alternative würde zu unerwünschten Fehl-Erkennungen führen und die zweite Alternative beeinträchtigt, weil gegebenenfalls zu spät auf einen tatsächlich fehlerhaften Drehmomentanstieg reagiert werden kann, die Betriebssicherheit des Verbrennungsmotors.

Die Ziffer 58 repräsentiert den Gesamtverlauf des Schwellenwertes SW nach dem Stand der Technik. Dieser Verlauf weist einen anfänglich erhöhten Pegel 60 auf, der zum Zeitpunkt t_1 sprungartig auf einen Zielwert 62 reduziert wird.

Figur 4 zeigt die Verhältnisse im Rahmen eines Ausführungsbeispiels der Erfindung. Dabei ist zur Verdeutlichung der positiven Wirkungen der Erfindung ein flacherer Verlauf 73 der Ansteuersignalreduzierung nach dem Auslösen eines Schiebebetriebs zum Zeitpunkt t_0 sowie eine größere Amplitude der Eingriffe von Komfortfunktionen im Ansteuersignalverlauf 74 angenommen worden. Bei der Vorgehensweise nach dem Stand der Technik, also nach Figur 3, könnte beispielsweise der große Eingriff einer Komfortfunktion, wie er sich im Maximum 75 des Signalverlaufs 74 darstellt, zur unerwünschten Auslösung einer Fehlerreaktion durch Überschreiten des Schwellenwertes 62 in Figur 3 führen.

Diese unerwünschte Folge wird im Rahmen der Erfindung dadurch vermieden, dass der Schwellenwert SW von einem Ausgangswert 68 nicht sprungartig auf einen Endwert 72 reduziert wird, sondern dass er in einer Zwischenphase zwischen den Zeitpunkten t_1 und t_3 in Figur 4 in einer Weise reduziert wird, die dem Verlauf des Ansteuersignals 74 angepasst ist. Wie in Figur 3, wird auch in Figur 4 ein Schiebebetrieb zum Zeitpunkt t_0 ausgelöst. Daraufhin sinkt das mittlere Ansteuersignal 73 ab und es kommt durch Eingriffe der Komfortfunktionen zu dem oszillierenden Verlauf 74 des Ansteuersignals AS. Die Anpassung der Absenkung oder Reduzierung des Schwellenwertes SW an den Verlauf 74 des Ansteuersignals AS erfolgt beispielsweise dadurch, dass zu dem Zeitpunkt t_1, zu dem die Überwachung des Ansteuersignals freigegeben wird, zunächst der zu diesem Zeitpunkt t_1 aktuelle Wert des Ansteuersignals AS als AS(t_1) erfasst wird.

Zu diesem Wert wird in der Darstellung der Figur 4 ein Offset d hinzuaddiert, um einen Startwert des Schwellenwertes SW zum Zeitpunkt t_1 der Freigabe der Überwachung zu definieren. Anschließend wird der Schwellenwert SW stetig reduziert, bis er zu einem Zeitpunkt t_3 einen Endwert 72 erreicht, der dem Zielwert 62 aus Figur 3 entsprechen kann. Zwischen den Zeitpunkten t_1 und t_3 wird der Schwellenwert SW im Beispiel der Figur 4 rampenförmig, d. h. abschnittsweise linear, reduziert. Dazu wird er, ausgehend vom Startwert SW_t_1 zum Zeitpunkt t_1 mit zunehmender Zeit bis zum Zeitpunkt t_2 linear mit einer ersten Steigung reduziert. Anschließend erfolgt ab dem Zeitpunkt t_2 eine weitere Reduzierung mit einer verringerten Steigung. Dabei können die Steigungen und die Zahl der Abschnitte dem bei einem bestimmten Verbrennungsmotor 10 erwarteten Verlauf angepasst werden.

Es versteht sich, dass die oben für eine Ansteuerdauer eines Einspritzventils 18 beschriebene Überwachung ganz analog auf eine Überwachung anderer Leistungsstellglieder, wie Drosselklappen oder einer variablen Ventilsteuerung angewendet werden kann. Im Beispiel des Drosselklappenstellers würde beispielsweise ein bestimmter Drosselklappenöffnungswinkel einer Ansteuerdauer eines Einspritzventils 18 entsprechen, da beide Größen in ihrem jeweiligen technischen Umfeld jeweils wesentlich das Drehmoment des Verbrennungsmotors 10 bestimmen. Bei einer variablen Ventilsteuerung wäre gegebenenfalls die Ansteuerdauer oder der Ventilhub das angemessene Kriterium.

## Patentansprüche

1. Verfahren zum Betreiben eines Verbrennungsmotors (10) im Schiebebetrieb mit den Schritten:
Detektieren eines Übergangs in den Schiebebetrieb;
nach dem Detektieren des Übergangs, Freigeben einer Überwachung eines Ansteuersignals für ein Leistungsstellglied (18; 28; 30) des Verbrennungsmotors (10) dann, wenn vorbestimmte Freigabebedingungen erfüllt sind,
nach der Freigabe, Vergleichen eines Ansteuersignals für das Leistungsstellglied (18; 28; 30) des Verbrennungsmotors (10) mit einem Schwellenwert, und
Auslösen einer Fehlerreaktion dann, wenn das Ansteuersignal den Schwellenwert überschreitet,
**dadurch gekennzeichnet, dass**
der Schwellenwert in einer Übergangsphase von einem anfänglichen Wert an bis zu einem Endwert reduziert wird.

2. Verfahren nach Anspruch 1, **dadurch gekennzeichnet, dass** das Ansteuersignal eine Ansteuerdauer für ein Einspritzventil (18) ist.

3. Verfahren nach Anspruch 2, **dadurch gekennzeichnet, dass** der Wert des Ansteuersignals bei der Freigabe erfasst wird und der Schwellenwert durch Vergrößerung des erfassten Ansteuersignals gebildet wird.

4. Verfahren nach Anspruch 3, **dadurch gekennzeichnet, dass** die Vergrößerung durch additive Verknüpfung des erfassten Ansteuersignals mit einem vorbestimmten Abstand oder durch multiplikative Verknüpfung mit einem vorbestimmten Faktor oder durch Bestimmung des Schwellenwertes durch Offline-Bewertung der möglichen Betriebszustände erzielt wird.

5. Verfahren nach wenigstens einem der Ansprüche 1 bis 4, **dadurch gekennzeichnet, dass** der Schwellenwert stetig reduziert wird.

6. Verfahren nach wenigstens einem der Ansprüche 1 bis 5, **dadurch gekennzeichnet, dass** der Schwellenwert abschnittsweise linear reduziert wird.

7. Verfahren nach wenigstens einem der vorhergehenden Ansprüche, **dadurch gekennzeichnet, dass** die vorbestimmten Freigabebedingungen wenigstens das Abwarten einer Wartezeit von 500 ms bis 900 ms umfassen.

8. Verfahren nach wenigstens einem der vorhergehenden Ansprüche, **dadurch gekennzeichnet, dass** das Reduzieren des Schwellenwertes nach 1400 bis 3000 ms abgeschlossen ist.

9. Vorrichtung zum Betreiben eines Verbrennungsmotors (10) mit wenigstens einem Detektor (24), der Übergänge in den Schiebebetrieb detektiert, einem Steuergerät (20), das eine Überwachung eines Ansteuersignals für ein Leistungsstellglied (18; 28; 30) des Verbrennungsmotors (10) beim Vorliegen wenigstens einer vorbestimmten Freigabebedingung freigibt und das, nach der Freigabe, ein Ansteuersignal für das Leistungsstellglied (18; 28; 30) des Verbrennungsmotors (10) mit einem Schwellenwert vergleicht und eine Fehlerreaktion dann auslöst, wenn das Ansteuersignal den Schwellenwert überschreitet,
**dadurch gekennzeichnet, dass**
das Steuergerät (20) den Schwellenwert in einer Übergangsphase von einem anfänglichen Wert an bis zu einem Endwert reduziert.

10. Vorrichtung nach Anspruch 9, **dadurch gekennzeichnet, dass** das Steuergerät (20) wenigstens eines der Verfahren nach den Ansprüchen 2 bis 8 steuert.
